# FASCICULE DE BREVET EUROPEEN

(11) **EP 1 101 681 B1**
(45) Date de publication et mention de la délivrance du brevet: **19.11.2003**
(21) Numéro de dépôt: 00450015.3
(22) Date de dépôt: 20.11.2000
(51) Int. Cl.: B61B 12/00, G08B 21/02, B61B 12/06, G08B 25/10

(54) **Dispositif de sécurité pour un transporteur mécanisé à câble notamment de transfert de personnes**
Sicherheitsvorrichtung für einen angetriebenen Seilförderer, insbesondere für den Personentransport
Safety device for a powered cable conveyor, especially for the transport of persons

(30) Priorité: 18.11.1999 FR 9914509
(43) Date de publication de la demande: 23.05.2001
(73) Titulaire: Adour Vision System (Société à Responsabilité Limitée), 64110 Jurancon (FR)
(72) Inventeur: Braun, Richard, 64000 Pau (FR); Laporta, Didier, 64110 Jurancon (FR)
(74) Mandataire: Thébault, Jean-Louis

(56) Documents cités:
- AT-B- 368 960
- FR-A- 2 649 266
- US-A- 3 906 439

## Description

La présente invention concerne un dispositif de sécurité pour un transporteur mécanisé à câble, notamment du type remontée mécanique assurant le transfert de personnes.

Dans les villes, dans les stations de ski, qu'il s'agisse de lieux à forte dénivelée ou en ville, on trouve des transporteurs mécanisés à câble qui assurent le transport des personnes d'un point à un autre.

Ces transporteurs peuvent prendre différentes formes suivant les applications, perches de traction, télésièges ou télécabines et on appellera ces différents systèmes "remontée mécanique" pour la suite de la description, même dans le cas de transbordeur de ville pour lesquels la dénivelée est faible ou nulle. De même pour la suite de la description, on entend par "siège" ce qui supporte le ou les passagers, quelle qu'en soit sa forme et son agencement, les agrès comme les perches ou les cabines.

Dans tous les cas, au moins un câble, monté en boucle sans fin est tendu entre deux poulies et assure le support et/ou la traction des sièges supportant les passagers. Des agencements à poteaux et poulies assurent le guidage et la tension du câble suivant un trajet donné.

Ces remontées mécaniques disposent d'une plate-forme d'embarquement et de débarquement des passagers, sous la responsabilité d'au moins un agent d'exploitation, généralement un à chacune des deux extrémités de la remontée.

Les phases d'embarquement et de débarquement restent les plus délicates dans le sens où le passager ou le groupe de passagers présente un différentiel de vitesse qu'il lui faut compenser, ceci quasi-instantanément.

L'agent d'exploitation peut assurer une assistance et doit contrôler le bon déroulement de l'embarquement et/ou du débarquement.

Il convient bien sûr de gérer tout problème d'embarquement et/ou de débarquement le plus rapidement possible pour ne pas aggraver les conséquences.

On a constaté que les agents d'exploitation sont en nombre restreint, dans le respect de la réglementation mais ils sont au moins un par plate-forme. Cette limitation de personnel est une tendance générale qui consiste à optimiser les charges nécessaires au bon fonctionnement d'une installation mais sans perte de sécurité.

Si l'on s'intéresse à une remontée mécanique en hiver; le plus souvent l'agent d'exploitation assiste les passagers à l'embarquement mais il peut aussi assurer d'autres tâches comme un aménagement d'une zone de passage, une vérification technique ou un entretien téléphonique. L'agent peut également vérifier si les passagers sont bien munis de leur titre de transport si bien qu'il ne peut consacrer tout son temps à la seule sécurité. Par contre, il doit nécessairement rester dans une zone déterminée pour ne pas être éloigné des organes de sécurité de la remontée à laquelle il est rattaché, ce qui limite son activité.

En cas de problème, le seul moyen d'agir en toute sécurité est d'interrompre immédiatement le fonctionnement de la remontée mécanique. A cet effet, il est prévu un interrupteur d'arrêt d'urgence du type coup de poing. Cet interrupteur est installé dans la majorité des cas près d'une construction associée à la remontée, non loin de la plate-forme d'embarquement/débarquement.

On comprend dès lors qu'il faut à l'agent d'exploitation un temps non négligeable pour l'atteindre, temps qui s'ajoute au délai pour arrêter le déplacement du câble dont l'inertie est également importante, sur un arrêt spécifique.

Ceci peut être la source de manquements graves qui engagent la responsabilité de l'agent d'exploitation et par conséquent celle des exploitants.

Dans le cas de remontées mécaniques du type télésiège, il est prévu un garde-corps qui doit être abaissé après l'embarquement par les passagers eux-mêmes, avant de franchir une zone donnée. On constate que certains passagers ne le font pas, le font trop tardivement ou rencontrent des problèmes pour manoeuvrer ce garde-corps. Il faut dans ce cas arrêter la remontée au moins avant que les passagers sortent de la zone dans laquelle la responsabilité des exploitants est engagée.

Les conditions difficiles dans lesquelles travaillent tous ces matériels nécessitent néanmoins une fiabilité totale. Dans le cas d'un interrupteur d'arrêt d'urgence, la sécurité est totale puisque l'interrupteur est généralement interposé sur l'alimentation du pilotage du contact de la motorisation. Tout dispositif visant une application semblable à savoir l'arrêt d'urgence d'une remontée, doit présenter la même fiabilité.

On connaît bien sûr des installations qui sont très sophistiquées comme celle du brevet US-A-4 003 314. Une telle installation comprend de très nombreux capteurs de flèche du câble, d'alignement du câble sur les trains de poulies et de surveillance du contrepoids de tension. Une telle installation contrôle le bon fonctionnement des éléments mobiles comme le câble et les sièges mais ne s'intéresse aucunement aux personnes transportées, encore moins aux problèmes liés à l'embarquement des passagers. La transposition d'une surveillance des passagers uniquement par des capteurs n'est d'ailleurs pas possible et quand bien même elle le serait, il est indispensable de disposer d'un agent d'exploitation car l'intervention humaine, dans ce cas, est beaucoup plus prompte à interpréter la situation pour agir de façon adaptée que ne le ferait un ensemble de capteurs.

On connaît aussi un dispositif d'arrêt d'urgence de machines électriques par la demande de brevet FR-A-2 745 418 qui comprend un bracelet émetteur avec un contacteur électrique dont le signal est traité puis transmis par voie hertzienne à un boîtier fixe relié à la machine et qui en commande l'arrêt. Une telle installation fonctionne uniquement lorsque le contact est déclenché mais il n'y a aucune sécurité quant au bon fonctionnement de l'arrêt d'urgence au moment où l'on en a besoin. De plus, le problème du confinement du porteur dans une zone déterminée n'est pas soulevé.

C'est l'objet de la présente invention de pallier les problèmes de l'art antérieur, invention qui propose un dispositif de sécurité qui permet à l'agent d'exploitation d'agir instantanément et avec une liaison nécessairement en état de marche dite en sécurité active, par réflexe, qui permet une certaine liberté de mouvement de cet agent d'exploitation tout en limitant la zone de déplacement et ceci en contrôlant les éventuelles sorties de zone, qui est fiable, qui est simple et d'un faible encombrement, qui peut être adapté à différentes configurations de remontées et qui peut même être utilisé dans le cas de différentes installations juxtaposées.

A cet effet, le dispositif de sécurité pour une remontée mécanique de transport de personnes comprenant de façon connue au moins une roue menante et une roue menée ainsi qu'un câble d'entraînement auquel sont fixés des sièges, comprenant un interrupteur de sécurité équipé de moyens de déclenchement sans fil commandés par un boîtier portable et autonome avec au moins un bouton d'actionnement, se caractérise en ce que lesdits moyens de déclenchement sont à sécurité positive.

Plus particulièrement, les moyens de déclenchement à sécurité positive comprennent une porteuse modulée avec un code spécifique et établie en permanence entre les émetteurs/récepteurs de l'interrupteur de sécurité et du boîtier, la perte de cette porteuse ouvrant l'interrupteur de sécurité. Les moyens de sécurité déjà existants peuvent être maintenus et coexister.

Selon une autre caractéristique, la remontée mécanique comprend un périmètre P de sécurité et en ce que la portée des moyens de déclenchement sans fil est limitée à ce périmètre P de sécurité.

Le dispositif comprend en complément des moyens (IMO) de gestion de l'immobilité de l'émetteur, des moyens (PV) de passage en petite vitesse et d'arrêt électrique (AE) de la machinerie avec une émission de signaux sonores et une temporisation avant ouverture de l'interrupteur.

De plus, chaque siège peut comprendre un organe mobile de sécurité et un détecteur de position de cet organe qui émet un signal d'alerte visuel ou sonore vers un récepteur disposé soit dans le local associé et/ou directement dans le boîtier.

La présente invention est maintenant décrite en détail suivant un mode de réalisation particulier, non limitatif, en regard des dessins annexés qui représentent :
- figure 1, une vue schématique d'une installation de remontée mécanique du type télésiège, équipée d'un dispositif de sécurité selon l'invention,
- figure 2, une vue d'un schéma des liaisons de fonctionnement,
- figure 3, une vue d'une variante de réalisation avec une antenne à câble, et
- figure 4, une vue d'un boîtier de commande perfectionné.

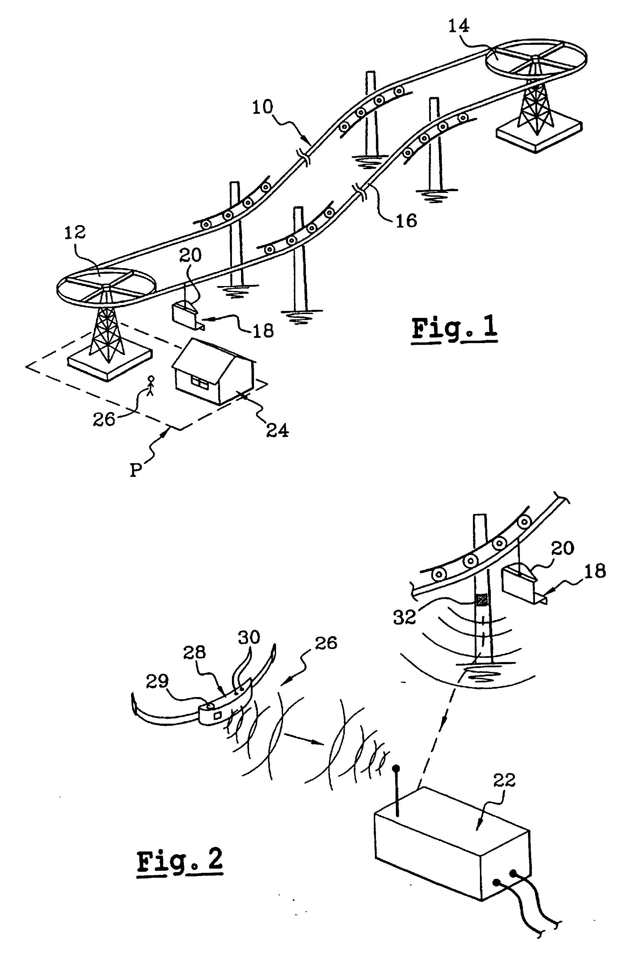

Sur la figure 1, on a représenté une remontée mécanique 10 en station de sport d'hiver, comprenant de façon simplifiée, une roue 12 menante entraînée par une machinerie, située en partie basse, une roue 14 menée, située en partie haute ainsi qu'un câble 16 d'entraînement auquel sont fixés des sièges 18.

Les sièges peuvent être de différentes formes, ouvertes, fermées mais ils présentent tous des moyens de sécurité visant à empêcher la chute des passagers. De même, pour une cabine, c'est le verrouillage de la fermeture de porte qui est concerné.

En l'occurrence, pour simplifier les explications qui vont suivre, ce moyen de sécurité est un garde-corps 20 basculant. Ce garde-corps peut prendre une position ouverte dans laquelle les passagers sont libres de s'installer dans le siège et une position fermée qui interdit aux passagers de quitter ledit siège, au moins involontairement.

Un périmètre de sécurité P est défini en fonction de paramètres liés à l'installation. Ce rayon d'action est celui dans lequel doit impérativement se situer l'agent d'exploitation pour respecter les règles couvrant les risques liés à l'installation.

Le dispositif comprend un interrupteur 22 de sécurité d'arrêt d'urgence de la machinerie qui est placé dans un local 24 attaché à l'installation et regroupant l'ensemble des moyens de sécurité, téléphone, moyens de contrôle de l'installation technique, écrans de surveillance.

Cet interrupteur 22 de sécurité est équipé de moyens 26 de déclenchement sans fil, commandés par un boîtier 28 portable et autonome avec au moins un bouton 29 d'actionnement.

Avantageusement, ces moyens de déclenchement sans fil travaillent en ondes hertziennes dans une bande de fréquences de l'ordre de 100 à 500 KHz pour donner un ordre de grandeur avec une fréquence dédiée spécifique à chaque installation, en respectant les normes radioélectriques en vigueur. Ainsi un boîtier 28 est rattaché à une installation et à un seul interrupteur, ce qui permet de disposer plusieurs installations côte à côte, même si les rayons d'action se recoupent, ceci sans interférence.

Ces moyens de déclenchement travaillent en sécurité positive c'est à dire que la porteuse, modulée par un code spécifique lie en permanence l'ensemble émetteur/récepteur du boîtier et de l'interrupteur pour vérifier que la liaison est établie. Toute perte de la porteuse déclenche une alarme 30 visuelle et/ou sonore, de préférence sonore ainsi que l'ouverture de l'interrupteur 22 de sécurité avec pour conséquence l'arrêt de l'installation. L'alarme peut être placée sur le boîtier et/ou en tout point stratégique De plus, la portée est définie si bien que l'agent d'exploitation porteur du boîtier est confiné dans le périmètre de sécurité P déterminé. En effet, s'il sort de ce périmètre, la porteuse est perdue et cela conduit à l'ouverture de l'interrupteur et à l'arrêt d'urgence de la remontée mécanique comme précédemment avec un choix d'alarmes associées visuelles, sonores, locales ou rapportées en complément dans un autre lieu, par exemple au poste central de contrôle de la station.

Avantageusement, il est utile de prévoir une temporisation du déclenchement de l'interrupteur de sécurité pour ne pas provoquer un arrêt intempestif uniquement pour une perte très momentanée de la liaison ou une sortie très temporaire du périmètre P de sécurité. Un autre moyen est de prévoir une pré-alarme qui informe le porteur que dans une durée déterminée très brève de quelques secondes, le déclenchement va avoir lieu.

En cas de panne, la porteuse est perdue et l'installation est arrêtée et ceci pour toute raison, défaillance technique des émetteurs/récepteurs, mauvaise charge et insuffisance de puissance du boîtier, non vigilance ou erreur d'interprétation de l'agent d'exploitation.

De façon complémentaire, l'installation est bien souvent équipée d'autres détecteurs comme un détecteur 32 d'abaissement du garde-corps. Ce détecteur est alors avantageusement relié au même indicateur sonore et/ou visuel existant rattaché au local par exemple par liaison filaire ou sans fil mais le signal peut aussi être doublé en le rapportant en complément sur le boîtier porté par l'agent. De ce fait, au-delà d'une zone donnée, l'agent d'exploitation est informé de la non fermeture du garde-corps et après contrôle visuel de la présence sur le siège d'un passager, il peut surveiller la situation qui conduit soit à un abaissement du garde-corps avec retard mais sans danger pour le ou les passagers, soit à un maintien du garde-corps relevé pour quelque raison que ce soit et dans ce cas, la remontée est arrêtée par l'agent d'exploitation au moyen de l'interrupteur de sécurité par commande à partir du boîtier qu'il porte.

Compte tenu de l'environnement de travail, les dispositifs de liaison sont soumis à des conditions de température, d'humidité qui peuvent occasionner des pannes et l'agencement en sécurité positive tel que prévu dans la présente invention est très important et le distingue des liaisons sans fil passive utilisées dans d'autres applications.

Sur la figure 2, on constate que l'agent d'exploitation peut être dans le périmètre P de sécurité tout en surveillant visuellement l'installation, en recevant les signaux des détecteurs complémentaires notamment du détecteur 32, et en restant en liaison positive sans fil avec l'interrupteur de sécurité.

Ceci permet de garantir une sécurité optimale du fonctionnement tout en libérant l'agent d'exploitation pour d'autres activités parallèles qui ne sont pas préjudiciables à sa liberté d'action et à son obligation de surveillance.

On note aussi que les actions de l'agent d'exploitation sont du type réflexe et qu'il n'y a aucun problème de maniement. De plus, même lorsqu'il se trouve à distance de l'interrupteur de sécurité, il n'y a plus le temps de parcours jusqu'à l'interrupteur comme cela était le cas avec les systèmes de l'art antérieur. D'ailleurs ce temps pouvait être augmenté de façon importante par la neige, la glace ou les obstacles. La sécurité du personnel se trouve aussi renforcée par l'absence de déplacements en urgence pour actionner. La distance au lieu du problème est même réduite la plupart du temps, notamment lorsqu'il fait de l'assistance à l'embarquement/débarquement.

L'agent d'exploitation dispose d'un rayon d'action augmenté car il n'est limité que par la portée des moyens de déclenchement et pour donner un ordre de grandeur, une quinzaine de mètres est tout à fait envisageable par rapport au périmètre P.

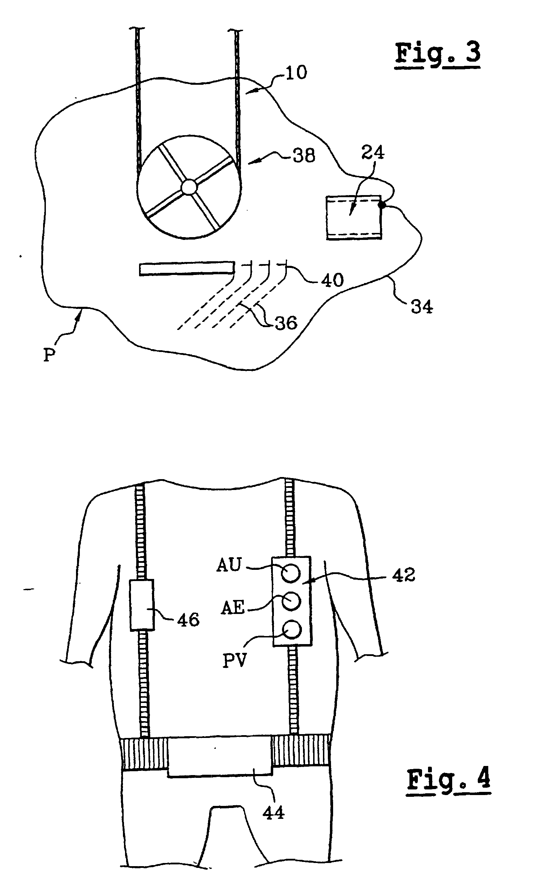

Sur la figure 3, on a représenté une variante de réalisation tout aussi efficace qui peut trouver un intérêt pratique dans le sens ou les risques de défaut sont encore améliorés et la délimitation du périmètre P de sécurité est définie avec une plus grande précision. Dans le cas du mode de réalisation principal, l'antenne de l'émetteur définit une portée sensiblement circulaire si bien qu'il faut soit une puissance suffisante pour couvrir toute la zone si l'antenne est placée en périphérie avec une couverture de zones inutiles, soit placer l'antenne au centre de la zone concernée, ce qui n'est pas toujours aisé pour des raisons de profil de terrain notamment et de protection contre les intempéries.

A cet effet, dans cette variante, le périmètre P de sécurité est déterminé par une antenne 34 filaire, noyée dans le sol. Cet antenne est un câble qui forme une boucle à induction qui peut suivre n'importe quel contour. Ceci permet, dans l'exemple de l'installation de sport d'hiver de la représentation de la figure 3 de privilégier la zone d'intervention où se situent les usagers (couloirs 36, zone d'embarquement 38 et les matériels (remontée mécanique 10, portillons 40) tandis que la zone arrière du local qui n'est pas critique, est exclue.

De plus, dans le mode de réalisation principal, seules les fonctions essentielles ont été décrites mais il est possible d'affiner ces fonctions et de permettre des interventions de l'agent d'exploitation qui ne sont plus des actions tout ou rien mais plus élaborées. De plus, il est prévu des pré-alarmes avec des temporisations pour éviter tout arrêt d'urgence intempestif.

Ainsi, on peut lister de façon non limitatives, en ne retenant que les fonctions et ordres essentiels suivants :
◆ Ordres de sécurité :
   - AE : l'arrêt électrique consiste à déclencher l'arrêt électrique de la machinerie, sans blocage des freins.
   - AU : l'arrêt d'urgence consiste en l'arrêt immédiat de la machinerie avec blocage des freins.
   - PV : la petite vitesse consiste simplement à ralentir la vitesse de la remontée pour une courte période.
◆ Ordres auxiliaires :
   - DA : le défaut accus signale une charge insuffisante de l'émetteur avec alarme sonore complémentaire
   - IMO le défaut d'immobilité avec temporisation consiste à rappeler à l'utilisateur qu'il faut porter l'émetteur et toute immobilité > 20s est détectée.
   - SA : la sécurité active consiste à vérifier le bon état de la liaison sans fil et la non sortie du périmètre de sécurité avec déclenchement d'une pré-alarme.

Lorsque les accus sont ramenés sur leur base de rechargement, la fonction SA est inactivée.

Il convient de prévoir des priorités dans les ordres sachant que l'arrêt d'urgence est toujours privilégié.

L'agent d'exploitation peut ainsi moduler l'action en fonction de la situation et évite un arrêt d'urgence quand un simple ralentissement est suffisant. Les pré-alarmes permettent aussi d'attirer l'attention et de limiter les interventions par une correction apportée par l'agent durant la temporisation.

Sur la figure 4, on a représenté un mode de réalisation de l'émetteur qui comprend un boîtier 42 de commande avec une antenne émettrice et une carte d'émetteur et les boutons de commande et un bloc accus 44 tels que disposés sur un baudrier ergonomique. Un emplacement 46 pour gaucher est également prévu car il s'agit de réactions réflexes et le positionnement des boutons doit être adapté pour éviter toute perte de temps et toute erreur de manipulation.

On constate que pour des raisons de simplification d'intervention et pour éviter tout risque de maniement, les commandes d'actionnement sont limitées aux seuls ordres de sécurité.

Les voyants d'interprétation des défauts et autres sont uniquement visibles au tableau dans le local afin de ne pas perturber l'attention de l'agent.

On remplace toutes les informations visuelles pour l'agent d'exploitation par des signaux sonores modulés en fonction du défaut. Ainsi le vibreur sonore utilisé pourra émettre des signaux spécifiques au degré d'urgence et d'importance, par exemple rapides, lents ou un signal continu suivant qu'il s'agit respectivement d'une pré-alarme défaut de charge de l'émetteur, d'un défaut d'abaissement de garde-corps ou d'une sortie de zone de sécurité active.

Ainsi, le dispositif qui vient d'être décrit permet, moyennant un ensemble comprenant au moins :
- un émetteur radio portable,
- des accus,
- un ensemble récepteur
- une antenne, notamment filaire au sol,
- un coffret de gestion des alarmes,
- un avertisseur sonore, éventuellement avec différenciation de garantir les fonctions suivantes :
   - garantir la présence de l'agent d'exploitation à son poste de travail,
   - arrêter à tout moment la machinerie en cas de nécessité immédiate,
   - ralentir la vitesse en maintenant prioritaire l'arrêt complet,
   - une gestion de la perte d'attention par la surveillance de l'immobilité,
   - une garantie du bon fonctionnement de l'installation par une sécurité active.

## Revendications

1. Dispositif de sécurité pour remontée mécanique (10) de transport de personnes, comprenant au moins une roue (12) menante entraînée par une machinerie, une roue (14) menée ainsi qu'un câble (16) d'entraînement auquel sont fixés des sièges (18), comprenant un interrupteur (22) de sécurité équipé de moyens (26) de déclenchement sans fil commandés par un boîtier (28) autonome et portable par un agent d'exploitation avec au moins un bouton (29) d'actionnement, **caractérisé en ce que** lesdits moyens de déclenchement sont à sécurité positive.

2. Dispositif de sécurité selon la revendication 1, **caractérisé en ce que** les moyens (26) de déclenchement à sécurité positive comprennent une porteuse modulée par un code spécifique et établie entre les émetteurs/récepteurs de l'interrupteur (22) de sécurité et du boîtier (28), la perte de cette porteuse ouvrant l'interrupteur de sécurité.

3. Dispositif de sécurité selon la revendication 2, **caractérisé en ce que**, préalablement à l'ouverture de l'interrupteur, il est prévu une pré-alarme avec une temporisation.

4. Dispositif de sécurité selon la revendication 1, 2 ou 3, **caractérisé en ce que** la remontée (10) mécanique comprend un périmètre P de sécurité et **en ce que** la portée des moyens de déclenchement sans fil est limitée à ce périmètre P de sécurité.

5. Dispositif de sécurité selon la revendication 4, **caractérisé en ce que** le périmètre P de sécurité est déterminé par une antenne (34) filaire au sol.

6. Dispositif de sécurité selon l'une quelconque des revendications précédentes, **caractérisé en ce qu'**il comprend en complément des moyens (IMO) de gestion de l'immobilité de l'émetteur, des moyens (PV) de passage en petite vitesse et d'arrêt électrique (AE) de la machinerie avec une émission de signaux sonores et une temporisation avant ouverture de l'interrupteur.

7. Dispositif de sécurité selon l'une quelconque des revendications précédentes, **caractérisé en ce que** chaque siège (18) comprend un organe (20) mobile de sécurité et un détecteur (32) de position de cet organe qui émet un signal d'alerte.

8. Dispositif de sécurité selon l'une quelconque des revendications 3 à 7, **caractérisé en ce que** les émissions sonores sont différentes en fonction du défaut.

9. Dispositif de sécurité selon l'une quelconque des revendications précédentes, **caractérisé en ce que** les émissions sont de type à ondes hertziennes.

10. Dispositif de sécurité selon l'une quelconque des revendications précédentes, **caractérisé en ce que** les ondes se situent à une fréquence spécifique choisie dans une plage de 100 à 500 KHz.

## Claims

1. A safety device for a ski lift (10) for transporting persons, including at least one driving wheel (12) driven by machinery, a driven wheel (14) and a drive cable (16) to which seats (18) are fixed, including a safety switch (22) equipped with wireless triggering means (26) controlled by a self-contained box (28) which can be carried by an operator with at least one actuating button (29), **characterised in that** said triggering means are of the positive safety type.

2. A safety device according to claim 1, **characterised in that** the positive-safety triggering means (26) includes a carrier modulated by a specific code and established between the transceivers of the safety switch (22) and of the box (28), the loss of this carrier opening the safety switch.

3. A safety device according to claim 2, **characterised in that**, prior to the opening of the switch, a pre-alarm with a time delay is provided.

4. A safety device according to claim 1, 2 or 3, **characterised in that** the ski lift (10) includes a safety perimeter P and **in that** the range of the wireless triggering means is limited to this safety perimeter P.

5. A safety device according to claim 4, **characterised in that** the safety perimeter P is determined by a cabled antenna (34) on the ground.

6. A safety device according to any one of the preceding claims, **characterised in that** it includes in addition means (IMO) for managing the immobility of the transmitter, means (PV) for switching the machinery to slow speed and electrical stop thereof (AE) with an emission of audible signals and a time delay before opening the switch.

7. A safety device according to any one of the preceding claims, **characterised in that** each seat (18) includes a movable safety member (20) and a position detector (32) for this member which emits a warning signal.

8. A safety device according to any one of claims 3 to 7, **characterised in that** the audible emissions are different according to the fault.

9. A safety device according to any one of the preceding claims, **characterised in that** the emissions are of the radio wave type.

10. A safety device according to any one of the preceding claims, **characterised in that** the waves are situated at a specific frequency chosen within a range from 100 to 500 kHz.

## Patentansprüche

1. Sicherheitsvorrichtung für mechanischen Lift (10) zum Personentransport, der wenigstens ein Antriebsrad (12), das durch eine Maschinerie angetrieben wird, ein angetriebenes Rad (14) sowie ein Antriebsseil (16), an dem Sitze (18) befestigt sind, umfasst, wobei die Sicherheitsvorrichtung einen Sicherheitsunterbrecher (22) umfasst, der mit drahtlosen Auslösemitteln (26) ausgerüstet ist, die durch ein selbstständiges und von einer Dienstperson tragbares Aggregat (28) mit wenigstens einer Betätigungstaste (29) gesteuert werden, **dadurch gekennzeichnet, dass** die Auslösemittel gemäß einer positiven Sicherheit arbeiten.

2. Sicherheitsvorrichtung nach Anspruch 1, **dadurch gekennzeichnet, dass** die Auslösemittel (26) mit positiver Sicherheit einen Träger umfassen, der durch einen spezifischen Code moduliert wird und zwischen den Sendern/Empfängern des Sicherheitsunterbrechers (22) und des Aggregats (28) aufgebaut wird, wobei der Verlust dieses Trägers den Sicherheitsunterbrecher öffnet.

3. Sicherheitsvorrichtung nach Anspruch 2, **dadurch gekennzeichnet, dass** vor dem Öffnen des Unterbrechers ein Voralarm mit Verzögerung vorgesehen ist.

4. Sicherheitsvorrichtung nach Anspruch 1, 2 oder 3, **dadurch gekennzeichnet, dass** der mechanische Lift (10) eine Sicherheitszone P aufweist und dass die Reichweite der drahtlosen Auslösemittel auf diese Sicherheitszone P begrenzt ist.

5. Sicherheitsvorrichtung nach Anspruch 4, **dadurch gekennzeichnet, dass** die Sicherheitszone P durch eine terrestrische Drahtantenne (34) bestimmt ist.

6. Sicherheitsvorrichtung nach einem der vorhergehenden Ansprüche, **dadurch gekennzeichnet, dass** sie außerdem Mittel (IMO) für die Steuerung der Unbeweglichkeit des Senders sowie Mittel (PV) für eine Bewegung mit geringer Geschwindigkeit und ein elektrisches Anhalten (AE) der Maschinerie unter Aussendung von Tonsignalen und mit einer Verzögerung vor dem Öffnen des Unterbrechers umfasst.

7. Sicherheitsvorrichtung nach einem der vorhergehenden Ansprüche, **dadurch gekennzeichnet, dass** jeder Sitz (18) ein mobiles Sicherheitsorgan (20) und einen Detektor (32) für die Position dieses Organs, der ein Warnsignal aussendet, umfasst.

8. Sicherheitsvorrichtung nach einem der Ansprüche 3 bis 7, **dadurch gekennzeichnet, dass** die Tonemissionen je nach Störung unterschiedlich sind.

9. Sicherheitsvorrichtung nach einem der vorhergehenden Ansprüche, **dadurch gekennzeichnet, dass** die Emissionen vom Funkwellentyp sind.

10. Sicherheitsvorrichtung nach einem der vorhergehenden Ansprüche, **dadurch gekennzeichnet, dass** die Wellen eine bestimmte Frequenz besitzen, die in einem Bereich von 100 bis 500 kHz gewählt ist.
